# EUROPEAN PATENT SPECIFICATION

(11) **EP 2 857 086 B1**
(45) Date of publication and mention of the grant of the patent: **08.12.2021**
(21) Application number: 13800430.4
(22) Date of filing: 04.06.2013
(51) Int. Cl.: B01D 61/54, B01D 61/48, C02F 1/42, B01D 15/04

(54) **DEIONIZATION FILTER AND METHOD FOR REGENERATING DEIONIZATION FILTER**
ENTIONISIERUNGSFILTER UND VERFAHREN ZUR REGENERIERUNG DES ENTIONISIERUNGSFILTERS
FILTRE DE DÉIONISATION ET PROCÉDÉ DE RÉGÉNÉRATION D'UN FILTRE DE DÉIONISATION

(30) Priority: 04.06.2012 KR 20120059755
(43) Date of publication of application: 08.04.2015
(73) Proprietor: Coway Co., Ltd., Chungcheongnam-do 314-895 (KR)
(72) Inventor: MOON, Hyoung-Min, Seoul 151-851 (KR); LEE, Soo-Young, Seoul 151-851 (KR); LEE, Kyung-Heon, Seoul 151-851 (KR); SON, Tae-Yong, Seoul 151-851 (KR)
(74) Representative: BCKIP
(86) International application number: PCT/KR2013/004917
(87) International publication number: WO 2013/183911

(56) References cited:
- EP-A2- 2 206 686
- WO-A1-2010/030383
- WO-A1-2012/161421
- WO-A1-2013/100628
- WO-A2-2012/161534
- KR-A- 20050 008 344
- KR-A- 20100 023 430
- KR-A- 20110 021 269
- KR-A- 20110 050 994
- US-A1- 2005 029 124
- US-A1- 2009 255 815
- US-B2- 6 580 598
- None

## Description

### [Technical Field]

The present disclosure relates to a deionization filter, and a method for regenerating the deionization filter, and more particularly to a deionization filter capable of determining a regeneration timing thereof by calculating an amount of solid matter adsorbed to the deionization filter, and a method for regenerating the deionization filter.

### [Background Art]

A deionization filter may remove ionic substances and the like contained in raw water using electrical attractive force to generate purified water. The deionization filter may remove ionic substances contained in raw water using a variety of methods. However, the amount of ionic substances capable of being adsorbed to the deionization filter may be limited, and an operation of regenerating the deionization filter may need to be performed after the adsorption and the removal of a predetermined amount or more of ionic substances. That is, it is necessary to regenerate the deionization filter such that the deionization filter performs a deionization operation by desorbing ionic substances adsorbed to the deionization filter and discharging the ionic substances together with raw water.

However, during the regeneration operation, since the deionization operation may be interrupted, an operation of generating purified water using the deionization filter may also be interrupted. In addition, raw water introduced at the time of the regeneration operation may be discarded together with the desorbed ionic substances in order to discharge the ionic substances, whereby a relatively large quantity of water may be wasted.

In particular, in the case of regions having raw water containing a large amount of hard water components such as metal ions and the like, if the deionization filter operates in the same manner as that in the case of a general region, a sufficient amount of ionic substances may not be removed from raw water, and the regeneration operation may not be performed at the time of necessity.

WO2010/030383 relates to a method of operating a capacitive deionization cell using a regeneration cycle to increase pure flow rate and efficiency of the cell.

EP 2 206 686 A2 relates to a deionization apparatus for regenerating electrodes using vibration and a method of controlling the same. The deionization apparatus includes electrodes to which ions contained in a fluid are absorbed, and a piezoelectric element to separate the ions absorbed to the electrodes by vibration.

US 2005/0029124 A1 relates to an apparatus to treat an influent solution comprising ions to obtain a selectable ion concentration in an effluent solution. The apparatus comprises an electrochemical cell comprising a housing comprising first and second electrodes. A water-splitting ion exchange membrane is between the first and second electrodes, the membrane comprising ananion exchange surface facing the first electrode, and an cation exchange surface facing the second electrode, or vice versa. The housing also has an influent solution inlet and an effluent solution outlet with a solution channel that allows influent solution to flow past both the anion and cation exchange surfaces of the water-splitting ion exchange membrane to form the effluent solution. A variable voltage supply is capable of maintaining the first and second electrodes at a plurality of different voltages during an ion exchange stage.

US2009/0255815 A1 relates to capacitive deionization (CDI), a non-membrane and chemical-free technique for water purification, used-water recycling, and seawater desalination. Ionic contaminants in the waters are retained by a static electric field built within the critical component of CDI, which is known as flow through capacitor (FTC). The FTC is formed by a plurality of monopolar and a plurality of bipolar electrodes, and a plural number of perforated holes are disposed on the FTC electrodes in a pattern that allows certain water flow rate and residence time to yield certain efficiency of electrode utilization.

### [Disclosure]

### [Technical Problem]

An aspect of the present disclosure provides a deionization filter capable of determining a regeneration timing thereof.

An aspect of the present disclosure also provides a method for regenerating a deionization filter capable of determining a regeneration timing thereof.

The above object of the present invention is achieved by the features defined in independent claims 1 to 4.

### [Technical Solution]

According to an aspect of the present disclosure, there is provided a method for regenerating a deionization filter, as defined in the appended claims 3 and 4. The method includes: a raw water total dissolved solids (TDS) measuring process of generating a raw water TDS value by measuring a TDS value of solid matter contained in raw water; an accumulated solids amount calculating process of generating an accumulated solids amount by adding up the amount of solid matter eliminated by the deionization filter removing the solid matter contained in the raw water; and a regenerating process of performing a regeneration operation on the deionization filter when the accumulated solids amount is equal to or greater than a predetermined solids amount limit.

The raw water TDS measuring process includes: a purified water TDS measuring process of generating a purified water TDS value by measuring a TDS value in purified water when the deionization filter removes the solid matter contained in the raw water at a predetermined target TDS removal rate to generate the purified water; and a raw water TDS calculating process of calculating the raw water TDS value using the purified water TDS value and the target TDS removal rate.

In the purified water TDS measuring process, the purified water TDS value may be generated by measuring a magnitude of a current flowing in at least one or more electrodes of the deionization filter during a deionization operation of removing the solid matter contained in the raw water by applying a voltage having a predetermined magnitude to the at least one or more electrodes.

In the purified water TDS measuring process, the purified water TDS value may be generated by measuring a magnitude of voltage applied to at least one or more electrodes of the deionization filter during a deionization operation of removing the solid matter contained in the raw water by allowing a predetermined magnitude of a current to flow in the at least one or more electrodes.

In the accumulated solids amount calculating process, the accumulated solids amount is calculated by multiplying an accumulated flow rate obtained by accumulating amounts of the raw water introduced to the deionization filter, the raw water TDS value, and a target TDS removal rate which is a predetermined rate of removing the solid matter from the deionization filter.

The accumulated solids amount calculating process includes: a solids amount calculating process of calculating the amount of the solid matter removed by the deionization filter during a predetermined period by multiplying a raw water TDS value measured during the predetermined period, the amount of raw water introduced to the deionization filter during the predetermined period, and the target TDS removal rate; and an accumulated solids amount adding process of calculating the amount of the solid matter every time the predetermined period is repeated and adding up the calculated amounts of the solid matter to obtain the accumulated solids amount.

The predetermined period may be set on the basis of an elapsed time or a flow rate of the raw water introduced to the deionization filter.

In the accumulated solids amount calculating process, after integrating a function of the raw water TDS value corresponding to the accumulated flow rate of the raw water introduced to the deionization filter, the accumulated solids amount may be calculated by multiplying an integrated value and the target TDS removal rate.

In the regenerating process, to at least one or more electrodes of the deionization filter, a voltage having a polarity opposite to that of a voltage applied during a deionization operation of removing the solid matter contained in the raw water may be applied.

In the regenerating process, during the applying of the voltage having the opposite polarity, water discharged from the deionization filter may drain to a drainpipe.

According to another aspect of the present disclosure, there is provided a deionization filter, as defined in the appended claims 1 and 2. The deionization filter includes: an electrode adsorbing solid matter contained in raw water using electrical attractive force or desorbing the adsorbed solid matter using an electrical repulsive force; and a power controlling unit applying, to the electrode, a deionization voltage allowing for the adsorption of the solid matter or a regeneration voltage allowing for detachment of the adsorbed solid matter.

The power controlling unit generates an accumulated solids amount by adding up amounts of the adsorbed solid matter after applying the deionization voltage to the electrode, and may apply the regeneration voltage when the accumulated solids amount corresponds to a predetermined solids amount limit.

The power controlling unit calculates the accumulated solids amount by multiplying an accumulated flow rate obtained by accumulating amounts of the raw water introduced to the deionization filter, a total dissolved solids (TDS) value in the raw water, and a target TDS removal rate which is a rate of removing the solid matter contained in the raw water by the electrode.

The power controlling unit calculates the TDS of the solid matter contained in the raw water by measuring a magnitude of a current flowing in the electrode after applying a voltage having a predetermined magnitude to the electrode.

The power controlling unit measures a magnitude of a current applied to the electrode to calculate a purified water TDS value indicating TDS in purified water during a deionization operation of removing the solid matter contained in the raw water by applying a voltage having a predetermined magnitude to the electrode, and subsequently, may calculate the raw water TDS value using the purified water TDS value and the target TDS removal rate.

### [Advantageous Effects]

In a deionization filter, a water treatment apparatus comprising the deionization filter, and a method for regenerating the deionization filter according to an exemplary embodiment of the present disclosure, since a regeneration timing of the deionization filter may be determined by calculating an amount of solid matter adsorbed to the deionization filter, a regeneration operation may be efficiently performed, and an amount of water wasted during the regeneration operation may be significantly reduced.

In a deionization filter, a water treatment apparatus comprising the deionization filter and a method for regenerating the deionization filter according to an exemplary embodiment of the present disclosure, since the amount of solid matter adsorbed to the deionization filter may be calculated in a predetermined period of time, a regeneration timing of the deionization filter may be more accurately determined.

In a deionization filter, a water treatment apparatus comprising the deionization filter, and a method for regenerating the deionization filter according to an exemplary embodiment of the present disclosure, a regeneration timing of the deionization filter may be accurately determined even in a case in which total dissolved solids (TDS) in raw water are varied.

In a deionization filter, a water treatment apparatus comprising the deionization filter, and a method for regenerating the deionization filter according to an exemplary embodiment of the present disclosure, since a flow rate of raw water to be introduced to the deionization filter may be previously calculated in order to perform a regeneration operation of the deionization filter, a timing at which the regeneration operation needs to be initiated may be easily determined.

### [Description of Drawings]

FIG. 1 is schematic diagrams illustrating operations of a deionization filter according to an exemplary embodiment of the present disclosure.

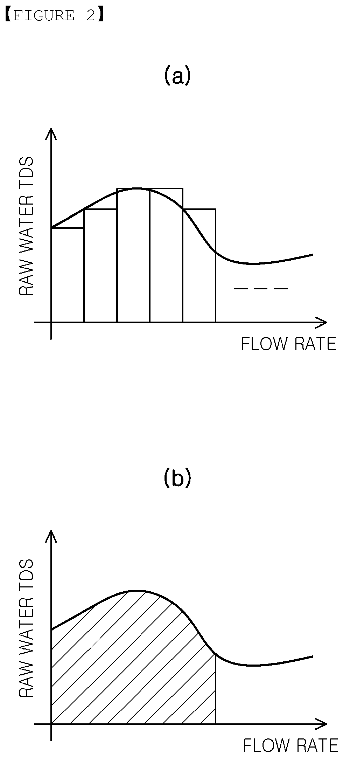

FIG. 2 is graphs illustrating a calculation of an accumulated solids amount using a graph illustrating a total dissolved solids (TDS) value in raw water introduced to the deionization filter according to an exemplary embodiment of the present disclosure.
FIG. 3 is a block diagram illustrating a water treatment apparatus comprising the deionization filter according to an exemplary embodiment of the present disclosure.
FIG. 4 is a flow chart illustrating a method for regenerating the deionization filter according to an exemplary embodiment of the present disclosure.
FIG. 5 is a flow chart illustrating a process of measuring total dissolved solids (TDS) in raw water, in the method for regenerating the deionization filter according to an exemplary embodiment of the present disclosure.
FIG. 6 is a flow chart illustrating a process of calculating an accumulated solids amount, in the method for regenerating the deionization filter according to an exemplary embodiment of the present disclosure.
FIG. 7 is a flow chart illustrating a method for regenerating a deionization filter according to another exemplary embodiment of the present disclosure.
FIG. 8 is a flow chart illustrating a method for regenerating a deionization filter according to another exemplary embodiment of the present disclosure.
FIG. 9 is a flow chart illustrating a method for regenerating a deionization filter according to another exemplary embodiment of the present disclosure.

### [Best Mode]

Exemplary embodiments of the present disclosure will now be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

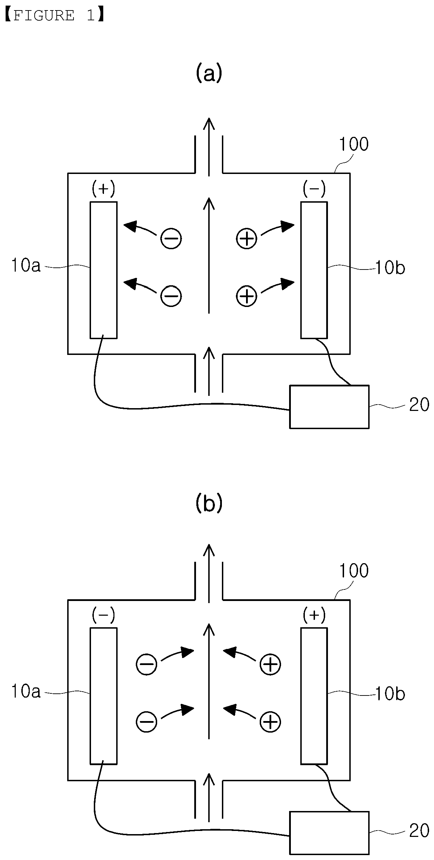

FIG. 1 is schematic diagrams illustrating operations of a deionization filter 100 according to an exemplary embodiment of the present disclosure.

Here, FIG. 1(A) illustrates a deionization operation of the deionization filter 100, removing solid matter contained in raw water and FIG. 1(B) illustrates a regeneration operation of the deionization filter 100, desorbing and discharging the solid matter adsorbed to the deionization filter.

Hereinafter, operations of the deionization filter 100 according to an exemplary embodiment of the present disclosure will be explained with reference to FIG. 1.

Referring to FIG. 1(A), the deionization filter 100 may remove solid matter contained in raw water therefrom using electric power. The solid matter contained in raw water may include mineral components such as calcium, sodium, magnesium, iron and the like, and the amount of solid matter dissolved in raw water may be represented by Total Dissolved Solids (TDS in mg/L or PPM). The total dissolved solids refersto a total amount of the solid matter dissolved in raw water and the solid matter is generally present as ionic materials in an ionic state.

The deionization filter 100 may be configured to remove solid matter contained in water by using one of an electrodialysis (ED) method, an electrodeionization (EDI) method and a capacitive deionization (CDI) method. In this case, since the solid matter removed from the deionization filter 100 may be ionic materials in an ionic state, the terms "removing solid matter" used throughout the specification and claims may include the concept of removing ionic materials.

In the case of removing solid matter present in raw water using the electrodialysis (ED) method, the deionization filter 100 may include electrodes and ion exchange membranes. Specifically, when a voltage is applied to raw water through the electrodes, solid matter contained in raw water may be moved to a positive electrode or a negative electrode according to a polarity thereof. Here, since the positive electrode and the negative electrode are provided with the ion exchange membranes, only the solid matter respectively moved by electrical attractive force may be collected/adsorbed to the ion exchange membranes. Thus, the deionization filter 100 may remove the solid matter from raw water introduced thereinto.

In the case of removing solid matter present in raw water using the electrodeionization (EDI) method, the deionization filter 100 may include electrodes, ion exchange membranes and an ion exchange resin. Specifically, cations and anions within raw water introduced to the deionization filter 100 may be collected/adsorbed using the ion exchange resin present between a cation exchange membrane and an anion exchange membrane. Here, when a voltage is applied to the ion exchange resin, the collection/adsorption of solid matter within raw water may be further rapidly undertaken by electrical attractive force. In this manner, since the solid matter present within raw water may be collected/adsorbed onto the ion exchange resin, the deionization filter 100 may remove the solid matter contained in raw water introduced thereto.

In the case of removing solid matter present in raw water using the capacitive deionization (CDI) method, the deionization filter 100 may neither include a separate ion exchange membrane nor an ion exchange resin, unlike in the cases of the electrodialysis (ED) method and the electrodeionization (EDI) method. That is, in the capacitive deionization (CDI) method, solid matter may be directly adsorbed to an electrode, whereby ions may be removed from raw water introduced to the deionization filter 100. Thus, the electrode of the deionization filter 100 may preferably be a porous carbon electrode having a wide surface area while having a low degree of reactivity. The porous carbon electrode may be formed of an active carbon. Since the active carbon has a superior pore volume, a relatively high specific surface area, high degrees of adsorption/desorption functions, and a relatively high lifespan, the active carbon may be preferably used as the electrode of the deionization filter 100.

As illustrated in FIG. 1(A), the deionization filter 100 may remove solid matter from raw water by applying power thereto, such that total dissolved solids present in the water passing through the deionization filter 100 may be reduced. Control of the total dissolved solids passing through the deionization filter 100 may be performed by a power controlling unit 20. That is, the power controlling unit 20 may control a magnitude of a voltage applied to electrodes 10a and 10b to thereby adjust total dissolved solids present in water discharged from the deionization filter 100. As the magnitude of the voltage applied to the electrodes 10a and 10b is increased, a degree of electrically attractive force received by the solid matter may be increased, whereby a further increased amount of solid matter may be adsorbed and removed from raw water.

However, the solid matter removed by the deionization filter 100 may include mineral ions, as well as heavy metals harmful to human bodies. Thus, a rate of the mineral ions to be removed from the water may be controlled by adjusting a magnitude of the voltage applied to the electrodes 10a and 10b according to a user's preference. That is, a user may control a magnitude of a voltage applied to both terminals of the electrodes 10a and 10b by using the power controlling unit 20 to thereby select one of ultra-purified water (mineral removal rate: 80% or greater), mineral water (mineral removal rate: 30% or more to below 80%), and general purified water (mineral removal rate: below 30%).

FIG. 1(B) illustrates a regeneration operation of the deionization filter 100 and through the regeneration operation, adsorbed solid matter may be desorbed and discharged externally together with raw water.

In the adsorbing members adsorbing solid matter within the deionization filter 100, such as the ion exchange membrane, the porous carbon electrode and the like, when an amount of solid matter beyond a solids amount limit is adsorbed to the adsorbing members, further solid matter may no longer be adsorbed to the adsorbing member or an adsorption rate of the solid matter may be significantly deteriorated. Thus, in order to perform a constant deionization operation of the deionization filter 100, it is necessary to remove the adsorbed solid matter through the regeneration operation.

Specifically, since the adsorbed solid matter is adsorbed to the filter by electrical attractive force applied from the electrodes 10a and 10b, the attached solid matter may be desorbed when a supply of power applied to the electrodes 10a and 10b is interrupted. Thus, when a state in which power is not supplied to the electrodes 10a and 10b may be maintained for a predetermined period of time, the desorbed solid matter may diffused into raw water introduced to the deionization filter 100, and the raw water may become concentrated water having a high concentration of solid matter. Thereafter, the concentrated water may be discharged outwardly, whereby the solid matter adsorbed to the deionization filter 100 may be removed.

Here, the desorption of the solid matter may be accelerated by applying a voltage having a polarity opposite to that of the voltage applied to the respective electrodes 10a and 10b during the deionization operation. For example, to an electrode receiving a positive (+) voltage applied thereto during the deionization operation, a negative (-) voltage may be applied during the regeneration operation. That is, negative (-) ions adsorbed by the positive (+) voltage may be more rapidly desorbed by an electrical repulsive force with respect to the negative (-) voltage applied during the regeneration operation.

Further, although not illustrated in FIG. 1(B), the deionization filter may include a separate drainpipe for discharging the concentrated water. That is, unlike a pipe discharging purified water from which solid matter has been removed, a drainpipe from which a high concentration of solid matter may be expelled may be separated provided.

The regeneration operation of the deionization filter 100 may be repeatedly performed at a periodic interval or every time a predetermined flow rate of raw water is introduced. However, in order to significantly reduce wasted water and energy and the like accompanied with the regeneration operation and to realize efficient operation of the deionization filter 100, a timing at which the regeneration operation is initiated may be controlled. That is, by constantly measuring total dissolved solids in raw water, the regeneration operation may be performed in case in which the amount of solid matter adsorbed to the deionization filter 100 corresponds to a solids amount limit.

Specifically, the power controlling unit 20 may calculate an accumulated solids amount by adding up the amount of the solid matter adsorbed by a voltage applied to the electrodes 10a and 10b during the deionization operation. Thereafter, when the accumulated solids amount corresponds to the solids amount limit, the regeneration operation is performed by applying a regeneration voltage. Here, the accumulated solids amount is calculated by multiplying an accumulated flow rate obtained by accumulating amounts of raw water introduced to the deionization filter 100, a total dissolved solids (TDS) value in the raw water (hereinafter, referred to as "a raw water TDS value"), and a target TDS removal rate, which is a rate of removing the solid matter contained in the raw water by the electrodes 10a and 10b.

The accumulated flow rate may be obtained by a flowmeter provided on a front end or rear end of the deionization filter 100, and the target TDS removal rate has a predetermined value depending on a percentage of mineral ions required by a user. In addition, the raw water TDS value may obtained by measuring a current flowing between the electrodes 10a and 10b after applying a reference voltage to both terminals of the electrodes 10a and 10b of the deionization filter 100. When, the reference voltage is applied to the both terminals of the electrodes 10a and 10b, an oxidation reaction or a reduction reaction may be caused by cations and anions present in the raw water, whereby the current may flow in both terminals of the electrodes 10a and 10b. In this case, a magnitude of the current may be in proportion to the total dissolved solids (TDS) in the raw water. Thus, the total dissolved solids (TDS) in the raw water may be obtained by using the magnitude of the current.

In connection with the calculation of the accumulated solids amount, since the total dissolved solids (TDS) in the raw water may be expressed in a unit of mg/L or PPM, a total amount of solid matter introduced to the deionization filter 100 may be calculated by multiplying the TDS value and the accumulated flow rate. However, not all of the introduced solid matter may be adsorbed, but only a portion of the solid matter may be adsorbed to the deionization filter 100 according to the target TDS removal rate. Thus, an amount of the solid matter adsorbed to the deionization filter 100 may be obtained by multiplying the total amount of the introduced solid matter and the target TDS removal rate.

The solids amount limit of the deionization filter 100 may be determined by a type, a size and a shape of the filter and the like. Each deionization filter 100 may have a predetermined value of the solids amount limit.

When the accumulated solids amount calculated as described above corresponds to the solids amount limit, since the deionization filter 100 may no longer perform the deionization operation, the power controlling unit 20 may apply the regeneration voltage to the electrodes 10a and 10b to thereby perform the regeneration operation. Here, the regeneration voltage may be 0V (in this case, voltage is not applied) or may have a polarity opposite to that of the deionization voltage.

Further, the accumulated solids amount may be calculated by adding up the amount of solid matter accumulated in the deionization filter 100 during every predetermined period.

That is, as illustrated in FIG. (2A), after measuring total dissolved solids (TDS) in raw water during every predetermined period, and multiplying the amount of the raw water introduced during the period and the TDS-removal rate to calculate a removal amount of the solid matter removed during one period, the amounts of the solid matter calculated for respective periods is added up to thereby calculate the accumulated solids amount. In this case, even in a case in which the total dissolved solids (TDS) in raw water are largely varied, a regeneration timing of the deionization filter 100 may be accurately determined, whereby the regeneration operation may be performed. Here, the predetermined period may be a constant interval of time or a timing at which a constant flow rate of raw water is introduced.

Further, as illustrated in FIG. (2B), a function of the total dissolved solids (TDS) in the raw water, corresponding to the accumulated flow rate of the raw water may be integrated, and the integrated value may be multiplied by the TDS-removal rate, whereby the accumulated solids amount may be calculated.

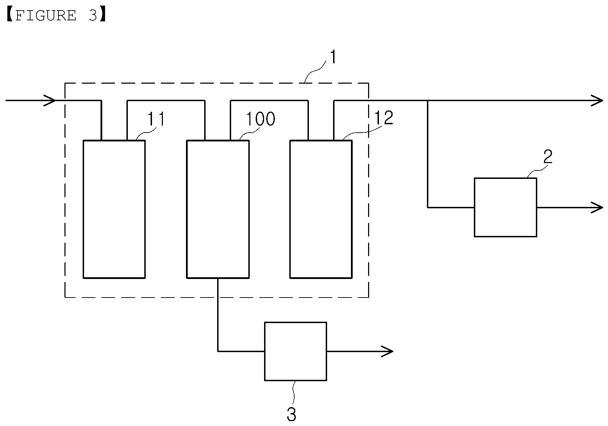

FIG. 3 is a block diagram illustrating a water treatment apparatus including the deionization filter according to an exemplary embodiment of the present disclosure.

Referring to FIG. 3, the water treatment apparatus including the deionization filter according to an exemplary embodiment of the present disclosure may include a filter unit 1 and a water treatment unit 2, and may further include a drain value 3.

Hereinafter, the water treatment apparatus including the deionization filter according to an exemplary embodiment of the present disclosure will be explained, with reference to FIG. 3.

The water treatment apparatus may be variously used for industrial or domestic purposes as well as commercial purposes, such as being used to treat wastewater or to produce ultrapure water. Here, the water treatment apparatus may, in particular, relate to a water treatment apparatus used for drinking purpose. Since the water treatment apparatus used for drinking purpose may receive and filter raw water to generate purified water for drinking purposes, the water treatment apparatus may be termed a water purifier in a narrow sense. In this manner, the water purifier may be configured to receive raw water and provide room temperature-purified water having passed through a filter unit to a user. The water purifier may also be configured to heat/or cool the room temperature-purified water to thereby provide hot water and/or cold water to a user.

In addition, the water treatment apparatus for drinking purposes may also include a functional water supply device supplying various types of functional water such as ionic water, carbonic acid water, and oxygenated water, as well as supplying purified water. In addition to this, examples of the water treatment apparatus for drinking purposes may include a water heater, a water cooler, an ice making machine, and the like. Thus, the term "water treatment apparatus" may be used to have a general concept including a water purifier, a functional water supply device, a water heater, a water cooler, and an ice making machine and the like as described above, and an apparatus having multifunctions of the devices.

The filter unit 1 may filter raw water introduced thereinto to generate purified water and may remove impurity particles, heavy metals and other harmful materials contained in raw water introduced to the water treatment apparatus, such as tap water or natural water. Specifically, the filter unit 1 may sequentially filter and purify raw water. The filter unit 1 may include at least one from among various types of filters including a sediment filter, a pre-carbon filter, the deionization filter 100, and a post-carbon filter, and types, the number, and the sequence of the filters may be variously modified depending on a filtration method for the water treatment apparatus or a required filtering performance of the water treatment apparatus. For example, a complex pre-filter 11 formed by integrating the sediment filter with the pre-carbon filter may be used. In addition, a microfilter or other functional filters may be provided by replacing or adding the filters as described above.

The sediment filter may be formed of non-woven fabric to filter foreign matter and suspended matter contained in raw water, and the pre-carbon filter may be formed of interfacial activated carbon to filter chlorine components or an odor contained in raw water, and the like. A post-carbon filter 12 may have relatively high adsorbing properties as compared to the interfacial activated carbon of the pre-carbon filter, such that it may remove a pigment and an odor contained in raw water.

In addition, the deionization filter 100 provided to remove solid matter in the exemplary embodiment of the present disclosure may be disposed between the complex pre-filter 11 and the post-carbon filter 12, as illustrated in FIG. 3, but the present disclosure is not limited thereto. The deionization filter 100 may be used together with other filters and only the deionization filter 100 may be included in the filter unit 1, alone. Since concrete operations and functions of the deionization filter 100 are described above, a detailed description thereof may be omitted herein.

Furthermore, the drainpipe of the deionization filter 100 may be provided with the drain value 3 for discharging concentrated water generated during the regeneration operation of the deionization filter 100. When the drain value 3 is opened in order to discharge concentrated water generated through the regeneration operation, the concentrated water may be discharged through the drainpipe. The drain value 3 may be generally realized as a latch value.

The water treatment unit 2, a component processing purified water filtered by the filter unit 1, may be a heater heating room temperature-purified water to provide hot water, a cooler cooling room temperature-purified water to provide cold water, a functional water generator supplying various types of functional water such as ionic water, carbonic water, and oxygenated water, or an ice making machine generating ice. Further, the water treatment unit 2 may be a component performing various functions using purified water, such as a coffeemaker or the like used to brew coffee or tea. The water treatment unit 2 may include at least one of the water treatment apparatuss, and purified water filtered by the filter unit 1 may be directly provided to a user.

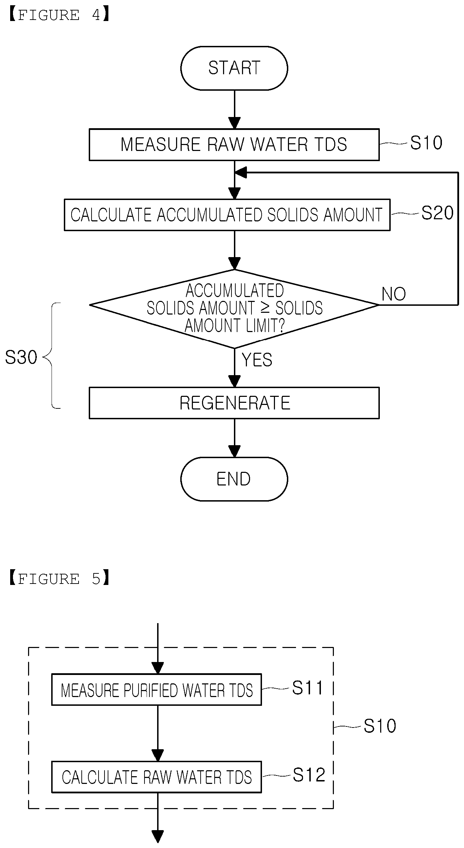

FIG. 4 is a flow chart illustrating a method for regenerating the deionization filter according to an exemplary embodiment of the present disclosure.

Referring to FIG. 4, the method for regenerating the deionization filter according to an exemplary embodiment of the present disclosure includes a process of measuring total dissolved solids (TDS) in raw water (hereinafter, referred to as "a raw water TDS measuring process") (S10); a process of calculating an accumulated solids amount (hereinafter, referred to as "an accumulated solids amount calculating process) (S20); and a regenerating process (S30).

Hereinafter, the method for regenerating the deionization filter according to an exemplary embodiment of the present disclosure may be explained with reference to FIG. 4.

In the raw water TDS measuring process (S10), a raw water TDS value may be generated by measuring a TDS value of solid matter contained in the raw water. Since the time required for the solid matter to be adsorbed in an amount reaching the solids amount limit may be varied depending on the raw water TDS value, the raw water TDS value may be first determined in order to determine a regeneration timing of the deionization filter.

In connection with the measurement of the raw water TDS value, the raw water TDS value may be directly measured but it may be calculated from a TDS value in purified water (hereinafter, referred to as "purified water TDS value") from which solid matter is removed by the deionization filter.

In detail, in the case of directly obtaining the raw water TDS value, the raw water TDS value may be obtained by a scheme of introducing raw water into the deionization filter in a state in which voltage is not applied to the electrodes of the deionization filter and subsequently, measuring a value of a current flowing in the electrodes by applying a reference voltage to the electrodes. In this case, since the raw water TDS value is high, the measured current value may also be high to cause an overload in a circuit. In addition, since the raw water needs to be introduced while voltage is not being applied to the electrodes, disadvantages such as the interruption of the deionization operation may be present. However, since the raw water TDS value may be directly input, advantages capable of checking a purifying function, a replacement period and the like, of the deionization filter may be provided.

On the other hand, in the case of calculating the raw water TDS value from the purified water TDS value, the purified water TDS value may be obtained by reading a current value measured during the deionization operation of removing solid matter contained in the raw water by applying a voltage to the electrodes of the deionization filter. The raw water TDS value may be calculated by multiplying the purified water TDS value and a target TDS removal rate of the deionization filter. When raw water is introduced in a state in which a voltage is applied to the electrodes of the deionization filter, since an adsorption operation may be performed in an instant, a current flowing between the electrodes may have a value corresponding to the purified water TDS value. In this manner, in the case of calculating the raw water TDS value using the purified water TDS value, since an amount of total dissolved solids (TDS) contained in the purified water is low, the measured current value may also be low, whereby the possibility of causing an overload in a circuit may be low. However, a difference between the calculated raw water TDS value and an actual raw water TDS value may be present, and a purifying function, a replacement period and the like, of the deionization filter may not be checked.

Concretely, the process of calculating the raw water TDS value using the purified water TDS value may further include a purified water TDS measuring process (S11) and a raw water TDS calculating process (S12).

In the purified water TDS measuring process (S11), the purified water TDS value is obtained by measuring total dissolved solids (TDS) in the purified water discharged by the deionization filter that removes solid matter contained in the raw water at a predetermined target TDS removal rate. In the raw water TDS calculating process (S12), the raw water TDS value is calculated using the purified water TDS value.

In the purified water TDS measuring process (S11), the purified water TDS value may be obtained by measuring a magnitude of a current flowing in at least one or more electrodes of the deionization filter during the deionization operation of removing the solid matter contained in the raw water by applying a voltage having a predetermined magnitude to the at least one or more electrodes of the deionization filter. That is, raw water may be consecutively introduced to the electrodes to which a voltage is applied, to thereby generate purified water from which the solid matter is removed, and then, a magnitude of a current flowing due to a residual portion of the solid matter remaining in the purified water may be measured, whereby the purified water TDS value may be measured.

According to another exemplary embodiment, the deionization operation may be performed by allowing a predetermined magnitude of a current to flow in at least one or more electrodes of the deionization filter, and in the purified water TDS measuring process (S11), the purified water TDS value may be generated by measuring a magnitude of the voltage applied to the electrodes during the deionization operation.

According to another exemplary embodiment, in the raw water TDS calculating process (S12), in addition to a scheme of directly measuring a magnitude of a current flowing in both terminals of the electrodes, a TDS measuring device for measuring total dissolved solids (TDS) may be provided in a rear end of the deionization filter, and thus, a TDS value measured by the TDS measuring device may be referred to as the purified water TDS value. Any TDS measuring device may be used, as long as it is able to measure the purified water TDS value. In addition, the TDS measuring device may be provided in a front end of the deionization filter, whereby the raw water TDS value may be directly measured.

In the raw water TDS calculating process (S12), the raw water TDS value may be calculated using the purified water TDS value and the target TDS removal rate. Since the deionization filter may remove the solid matter contained in the raw water at a predetermined target TDS removal rate, the raw water TDS value may be calculated if the purified water TDS value and the target TDS removal rate are known to a user. For example, when the purified water TDS value is 10ppm and the target TDS removal rate is 90%, the raw water TDS value may be considered to be 100ppm.

In the accumulated solids amount calculating process (S20), the accumulated solids amount is calculated by adding up the amount of solid matter eliminated by the deionization filter removing the solid matter contained in the raw water. Since the amount of solid matter capable of being adsorbed to the deionization filter may have a constant limiting value, it is necessary to determine whether or not the amount of the solid matter adsorbed to the deionization filter corresponds to the solids amount limit.

In detail, through the accumulated solids amount calculating process (S20), the amount of the solid matter adsorbed to the deionization filter is calculated. In the accumulated solids amount calculating process (S20), the accumulated solids amount is calculated by multiplying an accumulated flow rate obtained by accumulating the amount of raw water introduced to the deionization filter, the raw water TDS value, and the target TDS removal rate, which is a predetermined rate of removing the solid matter from the deionization filter.

The accumulated flow rate is obtained by a flowmeter provided on a front end or rear end of the deionization filter, and the target TDS removal rate has a value set depending on a percentage of mineral ions required by a user. In addition, the raw water TDS value is measured in the raw water TDS measuring process (S10).

Since the raw water TDS value may be expressed in a unit of mg/L or PPM, a total amount of the solid matter introduced to the deionization filter may be calculated by multiplying the raw water TDS value and the accumulated flow rate. However, since the introduced solid matter may be adsorbed according to the target TDS removal rate, the accumulated solids amount of the solid matter adsorbed to the deionization filter is obtained by multiplying the total amount of the introduced solid matter and the target TDS removal rate.

In addition to this, according to another exemplary embodiment of the present disclosure, after calculating the amount of solid matter removed by the deionization filter during a predetermined period, the accumulated solids amount is calculated by adding up the amounts of the solid matter removed during every predetermined period. In this manner, in the case of calculating the accumulated solids amount by adding up the amounts of the solid matter removed during every predetermined period, a regeneration timing of the deionization filter may be further accurately determined. Concretely, the accumulated solids amount calculating process (S20) may further include a solids amount calculating process (S21) and an accumulated solids amount adding process (S22).

In the solids amount calculating process (S21), the amount of the solid matter removed by the deionization filter during a predetermined period is calculated by multiplying a raw water TDS value measured during the predetermined period, the amount of raw water introduced to the deionization filter during the predetermined period, and the target TDS removal rate. Here, the amount of the solid matter removed during a single period may correspond to the area of a single rectangle illustrated in the graph of FIG. (2A).

Here, the predetermined period may be set on the basis of elapsed time or a flow rate of the raw water introduced to the deionization filter. However, the flow rate of the raw water introduced to the deionization filter may not be constant always, and the raw water may not be introduced to the deionization filter for a while according to a user's intention. Thus, the period may be preferably set on the basis of the flow rate of raw water introduced to the deionization filter.

In the accumulated solids amount adding process (S22), the amount of the solid matter is calculated every time the predetermined period is repeated, and the calculated amounts of the solid matter is added up to obtain the accumulated solids amount. That is, the accumulated solids amount is obtained by adding up the areas of the respective rectangles illustrated in FIG. (2A). Here, the accumulated solids amount may be more accurately calculated as the period is shortened. On the basis of the accumulated solids amount, a regeneration timing may be more accurately confirmed.

Further, as illustrated in FIG. (2B), after integrating a function of the raw water TDS value corresponding to the accumulated flow rate of the raw water introduced to the deionization filter, the accumulated solids amount is calculated by multiplying the integrated value and the target TDS removal rate.

In the regenerating process (S30), in a case in which the accumulated solids amount corresponds to a predetermined solids amount limit, a regeneration operation is performed on the deionization filter. Here, the solids amount limit may refer to the amount of solid matter attached to the deionization filter at the time at which a further amount of solid matter may no longer be adsorbed to the deionization filter or the amount of the solid matter adsorbed to the deionization filter is significantly reduced. The solids amount limit may be determined depending on a type, a shape, a size and the like, of the deionization filter.

Thus, in the regenerating process (S30), when the accumulated solids amount corresponds to the solids amount limit, the deionization operation may be interrupted and the regeneration operation may be performed. According to the regeneration operation, after solid matter adsorbed to the deionization filter may be desorbed, the desorbed solid matter may be discharged together with the raw water to thereby remove the solid matter from the deionization filter.

Concretely, in the regenerating process (S30), a state in which voltage is not applied to the electrode of the filter may be maintained for a certain period of time, whereby the solid matter detached from the electrode of the filter may be diffused into the introduced raw water. Thereafter, raw water containing a high concentration of solid matter, that is, concentrated water may be discharged, whereby the solid matter may be removed from the deionization filter.

Further, in the regenerating process (S30), to at least one or more electrodes of the deionization filter, a voltage having a polarity opposite to that of the voltage applied during the deionization operation may be applied to thereby accelerate the detachment of the solid matter. For example, in order to detach negative (-) ions drawn to a positive (+) electrode, a negative (-) voltage may be applied to the positive (+) electrode and in this case, the negative (-) ions may be further easily detached from the positive (+) electrode by an electrical repulsive force between the negative (-) voltage and the negative (-) ions. In addition, in the regenerating process (S30), while a voltage having the opposite polarity is applied during the deionization operation, water discharged from the deionization filter may drain to the drainpipe, whereby the detached solid matter may be discharged.

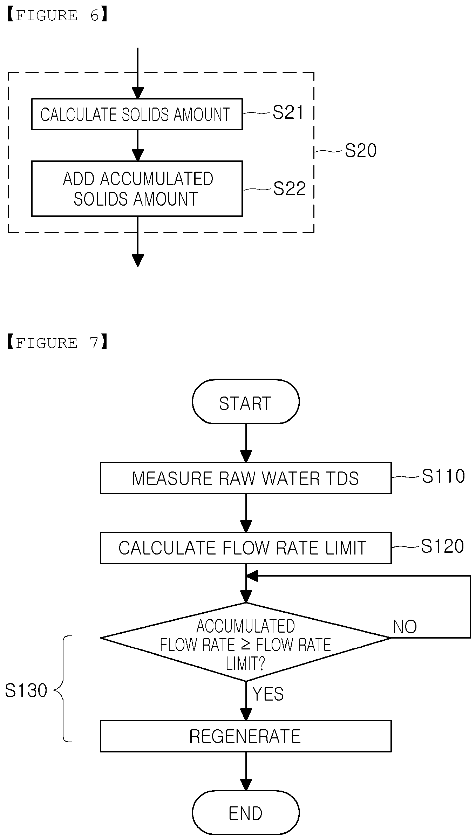

FIG. 7 is a flow chart illustrating a method for regenerating a deionization filter according to another exemplary embodiment of the present disclosure.

Referring to FIG. 7, the method for regenerating a deionization filter according to another exemplary embodiment of the present disclosure may include a raw water TDS measuring process (S110), a flow rate limit calculating process (S120), and a regenerating process (S130).

Hereinafter, the method for regenerating a deionization filter according to another exemplary embodiment of the present disclosure will be described with reference to FIG. 7.

In the raw water TDS measuring process (S110), a raw water TDS value may be generated by measuring a TDS value of solid matter contained in raw water. Since the raw water TDS measuring process (S110) is similar to the raw water TDS measuring process (S10) as described above, a detailed description will be omitted.

In the flow rate limit calculating process (S120), the solids amount limit may be divided by a multiplication of the raw water TDS value measured in the raw water TDS measuring process (S110) and a target TDS removal rate, to thereby calculate a flow rate limit. The flow rate limit may refer to an accumulated inflow rate of the raw water at the time at which the amount of the solid matter adsorbed to the deionization filter corresponds to the solids amount limit. Since the deionization filter may remove solid matter contained in raw water, the adsorbed solid matter may be increased in accordance with an increase in accumulated inflow rate of the raw water. Thus, when the accumulated inflow rate of the raw water corresponds to the flow rate limit, since the solid matter may be adsorbed in the solids amount limit onto the deionization filter, the regeneration operation may need to be performed on the deionization filter. Basically, the accumulated solids amount of the solid matter adsorbed to the deionization filter may be obtained by multiplying an accumulated flow rate, the raw water TDS value and the target TDS removal rate. Since the solids amount limit may refer to a maximum of the accumulated solids amount able to be adsorbed to the deionization filter, the solids amount limit may be obtained by multiplying the flow rate limit, the raw water TDS value and the target TDS removal rate. The solids amount limit may be determined depending on a type, a shape, a size and the like, of each deionization filter, and may be previously checked through an experiment and the like. Thus, the flow rate limit may be obtained by dividing the solids amount limit by a multiplication of the raw water TDS value and the target TDS removal rate.

In the regenerating process (S130), when the accumulated flow rate of raw water introduced to the deionization filter is greater than the flow rate limit, the regeneration operation may be performed on the deionization filter. When the flow rate limit is introduced to the deionization filter, it may be considered that the solids amount limit of the solid matter may be adsorbed to the deionization filter. Thus, the deionization operation of the deionization filter may be interrupted and the regeneration operation may be performed. Since the detailed description regarding the regeneration operation of the deionization filter is explained as set forth, it will be omitted herein.

On the other, when the accumulated flow rate is less than the flow rate limit, the procedure does not proceed to the regenerating process (S130), and while the deionization process may be performed, the accumulated flow rate may be calculated by accumulating flow rates of raw water introduced to the deionization filter. Thereafter, whether or not to perform the regeneration operation may be determined by comparing the accumulated flow rate with the flow rate limit.

Here, the raw water TDS measuring process (S110) and the flow rate limit calculating process (S120) may be periodically performed. The flow rate limit may be calculated during every interval based on the periodically measured raw water TDS value. However, in the case of calculating the flow rate limit during every interval, the calculation needs to be performed on the assumption that the limitation amount of solid matter has a value obtained by subtracting the amount of the solid matter adsorbed during a previous period from the solids amount limit. In this case, the amount of the solid matter adsorbed during the previous period may be obtained by multiplying a flow rate of the raw water introduced during the period, the raw water TDS value and the target TDS removal rate.

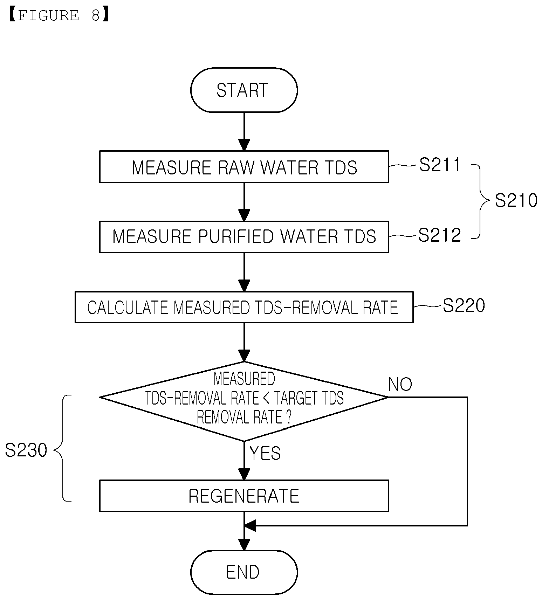

FIG. 8 is a flow chart illustrating a method for regenerating a deionization filter according to another exemplary embodiment of the present disclosure.

Referring to FIG. 8, the method for regenerating a deionization filter according to another exemplary embodiment of the present disclosure may include a TDS measuring process (S210), a process of calculating a removal rate of the measured TDS (hereinafter, referred to as "a measured TDS-removal rate calculating process") (S220) and a regenerating process (S230). The TDS measuring process (S210) may include a raw water TDS measuring process (S211) and a purified water TDS measuring process (S212).

Hereinafter, the method for regenerating a deionization filter according to another exemplary embodiment of the present disclosure may be explained with reference to FIG. 8.

In the TDS measuring process (S210), a total dissolved solids (TDS) value in raw water may be measured to generate a raw water TDS value, and a total dissolved solids (TDS) value in purified water produced by the deionization filter may be measured to thereby generate a purified water TDS value. Here, the purified water TDS value and the raw water TDS value may be individually measured, and may be generated through a raw water TDS measuring process (S211) and a purified water TDS measuring process (S212), respectively.

Specifically, in the raw water TDS measuring process (S211), after introducing the raw water to the deionization filter in a state in which voltage is not applied to electrodes of the deionization filter, a voltage having a predetermined magnitude may be applied to the electrodes. In this case, a magnitude of a current flowing in the electrodes may be measured, and the raw water TDS value may be generated using the magnitude of the current. Since the raw water is supplied in a state in which voltage is not applied to the electrodes of the deionization filter, in the case that the voltage is applied to the electrodes, the magnitude of the current flowing in the electrodes may be determined depending on the total dissolved solids (TDS) in raw water. That is, the raw water TDS value may be directly measured through the raw water TDS measuring process (S211).

In addition, in the purified water TDS measuring process (S212), during a deionization operation of removing solid matter contained in the raw water by applying a voltage having a predetermined magnitude to the electrodes of the deionization filter, a magnitude of a current applied to the electrodes may be measured. Since purified water from which the solid matter are already removed may be present within the deionization filter during the deionization operation, the purified water TDS value may be generated by using the magnitude of the current applied to the electrodes during the deionization operation.

In the measured TDS-removal rate calculating process (S220), a removal rate of the measured TDS (hereinafter, referred to as "a measured TDS-removal rate"), a rate at which the solid matter contained in the raw water is removed by the deionization filter, may be calculated using the raw water TDS value and the purified water TDS value. As described above, in order to generate purified water having a percentage of mineral ions required by a user, a target TDS removal rate of the deionization filter may be previously set. For example, in a case in which purified water having a mineral removal rate of 80% or more, such as ultra-purified water is desired by a user, the target TDS removal rate may be set to 80% and a voltage provided to satisfy the target TDS removal rate may be applied to both terminals of the electrodes of the deionization filter. However, the target TDS removal rate, a value set to satisfy the mineral removal rate desired by a user, may be different from an actual rate of removing solid matter from the deionization filter. In particular, in accordance with an increase in the amount of the solid matter adsorbed to the deionization filter, an actual TDS removal rate of the deionization filter may be deteriorated. In addition, in the case that a deteriorated deionization filter is used or the deionization filter is used in a region having water containing a great quantity of hardness components, the actual TDS removal rate may be remarkably deteriorated as compared to the target TDS removal rate.

Thus, in order to determine whether or not the deionization filter actually, appropriately remove the solid matter contained in the raw water, a rate at which the solid matter are removed from the deionization filter may be measured, and the measured rate may be referred to as the measured TDS-removal rate. Thus, a regeneration timing of the deionization filter, whether or not the deionization filter needs to be replaced, and the like may be determined by using the measured TDS-removal rate. Specifically, the measured TDS-removal rate may be calculated by using a measured TDS-removal rate (%) = 100 × (1- purified water TDS value/ raw water TDS value).

In the regenerating process (S230), when the measured TDS-removal rate is lower than a predetermined reference value, a regeneration operation may be performed on the deionization filter. When the measured TDS-removal rate is lower than a predetermined reference value, it may be considered that solid matter may be adsorbed to the deionization filter in an amount corresponding to the solids amount limit and thus, the deionization filter may not be properly operated. Accordingly, the regeneration operation may be performed on the deionization filter, such that the solid matter adsorbed to the deionization filter may be detached therefrom. Here, the reference value may be set by using the target TDS removal rate. For example, the reference value may be set within a predetermined error range of the target TDS removal rate, and whether or not the regeneration operation of the deionization filter is required may be determined.

Furthermore, after the regenerating process (S230), in the case that the measured TDS-removal rate is continuously determined to be less than the predetermined reference value a predetermined number of times or more, the method for regenerating a deionization filter according to another exemplary embodiment of the present disclosure may further include a filter replacement signal process (not shown) of indicating the necessity of replacing the deionization filter. Even with the regeneration operation of the deionization filter, in the case that the measured TDS-removal rate is continually determined to be less than the predetermined reference value, it may be considered that the deionization filter is in an abnormal state. Thus, a user may be informed of the necessity of replacing the deionization filter, using the filter replacement signal process. Various methods of informing a user about the necessity of replacing the deionization filter may be present, for example, a method for generating an alarm sound, a method for lighting up a warning lamp and the like

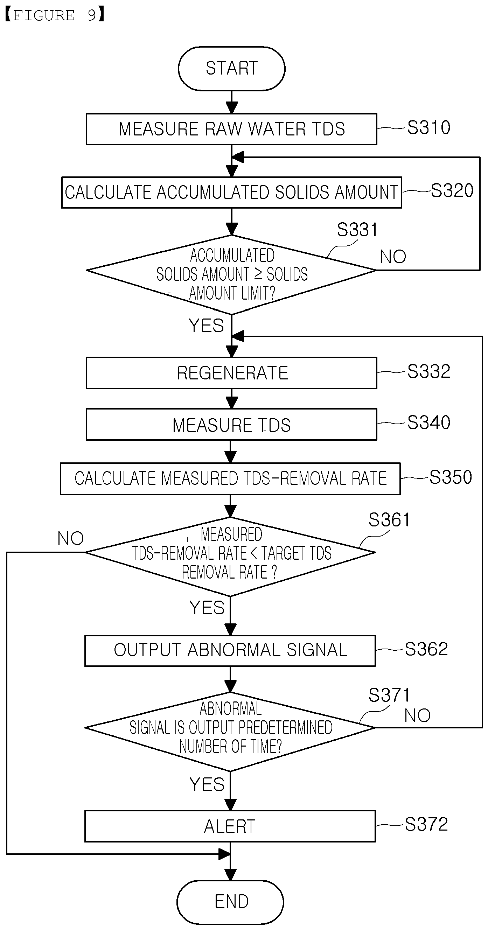

FIG. 9 is a flow chart illustrating a method for regenerating a deionization filter according to another exemplary embodiment of the present disclosure.

Referring to FIG. 9, the method for regenerating a deionization filter according to another exemplary embodiment of the present disclosure may include a raw water TDS measuring process (S310); an accumulated solids amount calculating process (S320); a regenerating process (S331 and S332); a TDS measuring process (S340); a measured TDS-removal rate calculating process (S350); an abnormal signal outputting process (S361 and S362) and an alerting process (S371 and S372).

Hereinafter, the method for regenerating a deionization filter according to another exemplary embodiment of the present disclosure may be explained with reference to FIG. 9.

In the raw water TDS measuring process (S310), a total dissolved solids (TDS) value in raw water may be measured to generate a raw water TDS value. Since the time required for the solid matter to be adsorbed in an amount reaching the solids amount limit may be varied depending on the raw water TDS value, the raw water TDS value may be first determined in order to determine a regeneration timing of the deionization filter. Since the method for measuring the raw water TDS value is described above, a detailed description thereof will be omitted.

In the accumulated solids amount calculating process (S320), the accumulated solids amount may be calculated by adding up the amount of solid matter eliminated by the deionization filter removing the solid matter contained in the raw water. As described above, the accumulated solids amount may be calculated by multiplying an accumulated flow rate obtained by accumulating the amount of raw water introduced to the deionization filter, the raw water TDS value, and a target TDS removal rate.

In the regenerating process (S331 and S332), a regeneration operation may be performed on the deionization filter when the accumulated solids amount is equal to or greater than a predetermined solids amount limit. In the case that sold matter is adsorbed in an amount equal to or greater the solids amount limit, a further amount of solid matter may no longer be adsorbed to the deionization filter or the amount of the solid matter adsorbed to the deionization filter is significantly reduced. Thus, as described above, a state in which voltage is not applied to the electrode of the deionization filter may be maintained for a certain period of time, or the regeneration operation such as an operation of applying a voltage having a polarity opposite to that of the electrode may be performed, whereby the solid matter adsorbed to the deionization filter may be desorbed and discharged.

However, despite of the regeneration operation in the regenerating process (S331 and S332), a case in which the deionization filter does not remove the solid matter at the target TDS removal rate may occur. In particular, in the case that a deteriorated deionization filter is used or the deionization filter is broken, the solid matter contained in the raw water may not be properly removed, whereby a level of purified water required by a user may not be generated. In this manner, in a case in which, despite of the abnormal state of the deionization filter, the deionization operation is re-performed after the regenerating process (S331 and S332), the solid matter contained in the raw water may not be removed and supplied to a user. Thus, in order to solve the limitation, the method for regenerating the deionization filter may further include a process of determining whether or not the deionization filter is abnormal.

Specifically, through the TDS measuring process (S340), when the regenerating operation is finished, the raw water TDS value may be re-generated, and a TDS value in purified water produced by the deionization filter may be measured to generate a purified water TDS value. As described above, the raw water TDS value may be calculated by a method for measuring a current flowing in the electrodes after introducing the raw water to the deionization filter in a state in which voltage is not applied to the electrodes of the deionization filter. In addition, the purified water TDS value may be obtained by a method for measuring a current flowing in the electrodes during the deionization operation of the deionization filter and calculating the purified water TDS value using a magnitude of the current. However, the purified water TDS value may also be calculated by a magnitude of a current previously measured during the deionization operation.

Thereafter, in the measured TDS-removal rate calculating process (S350), a measured TDS-removal rate, a rate at which solid matter contained in the raw water is removed by the deionization filter, may be calculated using the raw water TDS value and the purified water TDS value. The measured TDS-removal rate may be calculated by using a measured TDS-removal rate (%) = 100 × (1- purified water TDS value/ raw water TDS value). Whether or not the deionization filter is abnormal may be determined using the measured TDS-removal rate. That is, whether or not the deionization filter is normally operated may be determined by comparing the measured TDS-removal rate, an actual TDS-removal rate of the deionization filter with a target TDS removal rate set in the deionization filter.

Thus, in the abnormal signal outputting process (S361 and S362), an abnormal signal may be output to indicate the abnormal state of the deionization filter when the measured TDS-removal rate is lower than a predetermined reference value after the measured TDS-removal rate is compared with the predetermined reference value. Here, the predetermined reference value may be a value set within an error range of the target TDS removal rate.

Thereafter, in the alerting process (S371 and S372), an abnormal indication for the deionization filter may be visually or acoustically signified to a user when the abnormal signal is output. For example, a method for generating an alarm sound, a method for lighting up a warning lamp and the like may be present for the abnormal indication for the deionization filter.

Further, in the alerting process (S371 and S372), a replacement indication for the deionization filter may be presented when the abnormal signal is continually output a predetermined number of times or more. In the case of less than the predetermined number of times, the regeneration operation may be re-performed on the deionization filter. That is, even in the case that the measured TDS-removal rate of the deionization filter is determined to be abnormal, the regeneration operation may be repeated a predetermined number of times, whereby an attempt to enable the deionization filter to perform a normal operation thereof may be made. However, when the deionization filter is determined to be abnormal even after the regeneration operation is repeated a predetermined number of times, a user may be informed of the necessity of replacing the deionization filter.

While the present disclosure has been shown and described in connection with the embodiments, it will be apparent to those skilled in the art that the scope of the invention is defined by the appended claims.

## Claims

1. A deionization filter (100), comprising:
electrodes (10a, 10b) for adsorbing solid matter contained in raw water using electrical attractive force or desorbing the adsorbed solid matter using an electrical repulsive force;
a flowmeter provided on a front end or rear end of the deionization filter for obtaining the amount of raw water introduced to the deionization filter; and
a power controlling unit (20) applying to the electrodes a deionization voltage for allowing the adsorption of the solid matter or a regeneration voltage for allowing detachment of the adsorbed solid matter,
wherein the power controlling unit (20) is configured
to generate an accumulated solids amount by adding up amounts of the adsorbed solid matter after applying the deionization voltage to the electrodes, wherein the accumulated solids amount is calculated by: a) multiplying 1) a raw water total dissolved solids (TDS) value measured during a predetermined period, 2) the amount of raw water introduced to the deionization filter during the predetermined period, and 3) a target TDS removal rate which is a predetermined rate of removing the solid matter from the deionization filter, set depending on a percentage of mineral ions required by a user, wherein the total dissolved solids refers to a total amount of ionic materials in an ionic state, and b) adding up the calculated solids amount for respective periods, and
to apply the regeneration voltage when the accumulated solids amount corresponds to a predetermined solids amount limit,
wherein the power controlling unit is further configured to calculate the TDS of the solid matter contained in the raw water by measuring a magnitude of a current flowing in the electrodes by applying a voltage having a predetermined magnitude to the electrodes after introducing the raw water to the deionization filter in a state in which voltage is not applied to the electrodes of the deionization filter.

2. A deionization filter (100), comprising:
electrodes (10a, 10b) for adsorbing solid matter contained in raw water using electrical attractive force or desorbing the adsorbed solid matter using an electrical repulsive force;
a flowmeter provided on a front end or rear end of the deionization filter for obtaining the amount of raw water introduced to the deionization filter; and
a power controlling unit (20) for applying to the electrodes a deionization voltage for allowing the adsorption of the solid matter or a regeneration voltage for allowing detachment of the adsorbed solid matter,
wherein the power controlling unit (20) is configured
to generate an accumulated solids amount by adding up amounts of the adsorbed solid matter after applying the deionization voltage to the electrodes, wherein the accumulated solids amount is calculated by: a) multiplying 1) a raw water total dissolved solids (TDS) value measured during a predetermined period, 2) the amount of raw water introduced to the deionization filter during the predetermined period, and 3) a target TDS removal rate which is a predetermined rate of removing the solid matter from the deionization filter, set depending on a percentage of mineral ions required by a user, wherein the total dissolved solids refers to a total amount of ionic materials in an ionic state, and b) adding up the calculated solids amount for respective periods, and
to apply the regeneration voltage when the accumulated solids amount corresponds to a predetermined solids amount limit,
wherein the power controlling unit is further configured to measure a magnitude of a current applied to the electrodes to calculate a purified water TDS value indicating TDS in purified water during a deionization operation of removing the solid matter contained in the raw water by applying a voltage having a predetermined magnitude to the electrodes, and subsequently, calculate the raw water TDS value using the purified water TDS value and the target TDS removal rate.

3. A method for regenerating a deionization filter, comprising:
a raw water total dissolved solids (TDS) measuring process (S10) of generating a raw water TDS value by measuring a TDS value of solid matter contained in raw water;
an accumulated solids amount calculating process (S20) of generating an accumulated solids amount by adding up the amount of solid matter adsorbed to the deionization filter for removing the solid matter contained in the raw water during a deionization operation, by: a) multiplying 1) the raw water TDS value measured during a predetermined period, 2) an amount of raw water introduced to the deionization filter during the predetermined period, and 3) a target TDS removal rate which is a predetermined rate of removing the solid matter from the deionization filter, set depending on a percentage of mineral ions required by a user, wherein the total dissolved solids refers to a total amount of ionic materials in an ionic state, and b) adding up the calculated solids amount for respective periods; and
a regenerating process (S30) of performing a regeneration operation on the deionization filter when the accumulated solids amount corresponds to a predetermined solids amount limit,
wherein the TDS of the solid matter contained in the raw water is obtained by measuring a magnitude of a current flowing in the electrodes by applying a voltage having a predetermined magnitude to the electrodes after introducing the raw water to the deionization filter in a state in which voltage is not applied to the electrodes of the deionization filter.

4. A method for regenerating a deionization filter, comprising:
a raw water total dissolved solids (TDS) measuring process (S10) of generating a raw water TDS value by measuring a TDS value of solid matter contained in raw water;
an accumulated solids amount calculating process (S20) of generating an accumulated solids amount by adding up the amount of solid matter adsorbed to the deionization filter for removing the solid matter contained in the raw water during a deionization operation, by: a) multiplying 1) the raw water TDS value measured during a predetermined period, 2) an amount of raw water introduced to the deionization filter during the predetermined period, and 3) a target TDS removal rate which is a predetermined rate of removing the solid matter from the deionization filter, set depending on a percentage of mineral ions required by a user, wherein the total dissolved solids refers to a total amount of ionic materials in an ionic state, and b) adding up the calculated solids amount for respective periods; and
a regenerating process (S30) of performing a regeneration operation on the deionization filter when the accumulated solids amount corresponds to a predetermined solids amount limit,
wherein the raw water TDS measuring process includes:
a purified water TDS measuring process of generating a purified water TDS value by measuring a TDS value in purified water when the deionization filter removes the solid matter contained in the raw water at a predetermined target TDS removal rate to generate the purified water; and
a raw water TDS calculating process of calculating the raw water TDS value using the purified water TDS value and the target TDS removal rate.

## Patentansprüche

1. Entionisierungsfilter (100), umfassend:
Elektroden (10a, 10b) zum Adsorbieren von in Rohwasser enthaltenem Feststoff unter Verwendung einer elektrischen Anziehungskraft oder zum Desorbieren des adsorbierten Feststoffs unter Verwendung einer elektrischen Abstoßungskraft;
einen an einem vorderen Ende oder einem hinteren Ende des Entionisierungsfilters vorgesehenen Durchflussmesser zum Einholen der Menge an in den Entionisierungsfilter eingeleitetem Rohwasser; und
eine Stromstelleinrichtung (20) zum Anlegen einer Entionisierungsspannung an die Elektroden, um die Adsorption des Feststoffs zu ermöglichen, oder einer Regenerationsspannung an die Elektroden, um eine Ablösung des adsorbierten Feststoffs zu ermöglichen,
wobei die Stromstelleinrichtung (20) eingerichtet ist,
um eine akkumulierte Feststoffmenge durch Aufaddieren von Mengen des adsorbierten Feststoffs nach dem Anlegen der Entionisierungsspannung an die Elektroden zu erzeugen, wobei die akkumulierte Feststoffmenge durch a) Multiplizieren 1) eines während eines vorbestimmten Zeitraums gemessenen Rohwasser-Gesamtfeststoffgehalt-(TDS, engl. total dissolved solids)-Werts, 2) der Menge an während des vorbestimmten Zeitraums in den Entionisierungsfilter eingeleiteten Rohwassers und 3) einer Ziel-TDS-Entfernungsrate, welche eine vorbestimmte Entfernungsrate des Feststoffs von dem Entionisierungsfilter darstellt und in Abhängigkeit eins von einem Nutzer benötigten Prozentsatzes an mineralischen Ionen eingestellt ist, wobei sich der Gesamtfeststoffgehalt auf eine Gesamtmenge an ionischen Materialien in einem ionischen Zustand bezieht, und b) Aufsummieren der berechneten Feststoffmenge für entsprechende Zeiträume berechnet wird, und
um die Regenerationsspannung anzulegen, wenn die akkumulierte Feststoffmenge einem vorbestimmten Feststoffmengengrenzwert entspricht,
wobei die Stromstelleinrichtung ferner eingerichtet ist, um den TDS des in dem Rohwasser enthaltenen Feststoffs durch Messen einer Stärke eines in den Elektroden fließenden elektrischen Stroms durch Anlegen einer Spannung mit einer vorbestimmten Höhe an die Elektroden nach dem Einleiten des Rohwassers in den Entionisierungsfilter in einem Zustand, in welchem keine Spannung an die Elektroden des Entionisierungsfilters angelegt ist, zu berechnen.

2. Entionisierungsfilter (100), umfassend:
Elektroden (10a, 10b) zum Adsorbieren von in Rohwasser enthaltenem Feststoff unter Verwendung einer elektrischen Anziehungskraft oder zum Desorbieren des adsorbierten Feststoffs unter Verwendung einer elektrischen Abstoßungskraft;
einen an einem vorderen Ende oder einem hinteren Ende des Entionisierungsfilters vorgesehenen Durchflussmesser zum Einholen der Menge an in den Entionisierungsfilter eingeleitetem Rohwasser; und
eine Stromstelleinrichtung (20) zum Anlegen einer Entionisierungsspannung an die Elektroden, um die Adsorption des Feststoffs zu ermöglichen, oder einer Regenerationsspannung an die Elektroden, um eine Ablösung des adsorbierten Feststoffs zu ermöglichen,
wobei die Stromstelleinrichtung (20) eingerichtet ist,
um eine akkumulierte Feststoffmenge durch Aufaddieren von Mengen des adsorbierten Feststoffs nach dem Anlegen der Entionisierungsspannung an die Elektroden zu erzeugen, wobei die akkumulierte Feststoffmenge durch a) Multiplizieren 1) eines während eines vorbestimmten Zeitraums gemessenen Rohwasser-Gesamtfeststoffgehalt-(TDS, engl. total dissolved solids)-Werts, 2) der Menge an während des vorbestimmten Zeitraums in den Entionisierungsfilter eingeleiteten Rohwassers und 3) einer Ziel-TDS-Entfernungsrate, welche eine vorbestimmte Entfernungsrate des Feststoffs von dem Entionisierungsfilter darstellt und in Abhängigkeit eins von einem Nutzer benötigten Prozentsatzes an mineralischen Ionen eingestellt ist, wobei sich der Gesamtfeststoffgehalt auf eine Gesamtmenge an ionischen Materialien in einem ionischen Zustand bezieht, und b) Aufsummieren der berechneten Feststoffmenge für entsprechende Zeiträume berechnet wird, und
um die Regenerationsspannung anzulegen, wenn die akkumulierte Feststoffmenge einem vorbestimmten Feststoffmengengrenzwert entspricht,
wobei die Stromstelleinrichtung ferner eingerichtet ist, um eine Stärke eines an die Elektroden angelegten Stroms zu messen, um einen Aufbereitetes-Wasser-TDS-Wert, der den TDS in aufbereitetem Wasser anzeigt, während eines Entionisierungsvorgangs des Entfernens des in dem Rohwasser enthaltenen Feststoffs durch Anlegen einer Spannung mit einer vorbestimmten Höhe an die Elektroden zu berechnen und um anschließend den Rohwasser-TDS-Wert unter Verwendung des Aufbereitetes-Wasser-TDS-Werts und der Ziel-TDS-Entfernungsrate zu berechnen.

3. Verfahren zum Regenerieren eines Entionisierungsfilters, umfassend:
einen Rohwasser-Gesamtfeststoffgehalt- (TDS, engl. total dissolved solids)-Messprozess (S10) zum Erzeugen eines Rohwasser-TDS-Werts von in Rohwasser enthaltenem Feststoff;
einen Akkumulierten-Feststoffmenge-Berechnungsprozess (S20) zum Erzeugen einer akkumulierten Feststoffmenge durch Aufsummieren der Menge an Feststoff, die an dem Entionisierungsfilter adsorbiert ist, um den in dem Rohwasser enthaltenen Feststoff während eines Entionisierungsvorgangs zu entfernen, durch a) Multiplizieren 1) des während eines vorbestimmten Zeitraums gemessenen Rohwasser-TDS-Werts, 2) einer Menge an während des vorbestimmten Zeitraums in den Entionisierungsfilter eingeleiteten Rohwassers und 3) einer Ziel-TDS-Entfernungsrate, welche eine vorbestimmte Entfernungsrate des Feststoffs von dem Entionisierungsfilter darstellt und in Abhängigkeit eins von einem Nutzer benötigten Prozentsatzes an mineralischen Ionen eingestellt ist, wobei sich der Gesamtfeststoffgehalt auf eine Gesamtmenge an ionischen Materialien in einem ionischen Zustand bezieht, und b) Aufsummieren der berechneten Feststoffmenge für entsprechende Zeiträume; und
einen Regenerierungsprozess (S30) zum Durchführen eines Regenerierungsvorgangs an dem Entionisierungsfilter, wenn die akkumulierte Feststoffmenge einem vorbestimmten Feststoffmengengrenzwert entspricht,
wobei der TDS des in dem Rohwasser enthaltenen Feststoffs durch Messen einer Stärke eines in den Elektroden fließenden elektrischen Stroms durch Anlegen einer Spannung mit einer vorbestimmten Höhe an die Elektroden nach dem Einleiten des Rohwassers in den Entionisierungsfilter in einem Zustand, in welchem keine Spannung an die Elektroden des Entionisierungsfilters angelegt ist, eingeholt wird.

4. Verfahren zum Regenerieren eines Entionisierungsfilters, umfassend:
einen Rohwasser-Gesamtfeststoffgehalt- (TDS, engl. total dissolved solids)-Messprozess (S10) zum Erzeugen eines Rohwasser-TDS-Werts von in Rohwasser enthaltenem Feststoff;
einen Akkumulierten-Feststoffmenge-Berechnungsprozess (S20) zum Erzeugen einer akkumulierten Feststoffmenge durch Aufsummieren der Menge an Feststoff, die an dem Entionisierungsfilter adsorbiert ist, um den in dem Rohwasser enthaltenen Feststoff während eines Entionisierungsvorgangs zu entfernen, durch a) Multiplizieren des während eines vorbestimmten Zeitraums gemessenen Rohwasser-TDS-Werts, 2) einer Menge an während des vorbestimmten Zeitraums in den Entionisierungsfilter eingeleiteten Rohwassers und 3) einer Ziel-TDS-Entfernungsrate, welche eine vorbestimmte Entfernungsrate des Feststoffs von dem Entionisierungsfilter darstellt und in Abhängigkeit eins von einem Nutzer benötigten Prozentsatzes an mineralischen Ionen eingestellt ist, wobei sich der Gesamtfeststoffgehalt auf eine Gesamtmenge an ionischen Materialien in einem ionischen Zustand bezieht, und b) Aufsummieren der berechneten Feststoffmenge für entsprechende Zeiträume; und
einen Regenerierungsprozess (S30) zum Durchführen eines Regenerierungsvorgangs an dem Entionisierungsfilter, wenn die akkumulierte Feststoffmenge einem vorbestimmten Feststoffmengengrenzwert entspricht,
wobei der Rohwasser-TDS-Messprozess folgendes umfasst:
einen Aufbereitetes-Wasser-TDS-Messprozess zum Erzeugen eines Aufbereitetes-Wasser-TDS-Werts durch Messen eines TDS-Werts in aufbereitetem Wasser, wenn der Entionisierungsfilter den in dem Rohwasser enthaltenen Feststoff mit einer vorbestimmten Ziel-TDS-Entfernungsrate entfernt, um das aufbereitete Wasser zu erzeugen; und
einen Rohwasser-TDS-Berechnungsprozess zum Berechnen des Rohwasser-TDS-Werts unter Verwendung des Aufbereitetes-Wasser-TDS-Werts und der Ziel-TDS-Rate.

## Revendications

1. Filtre de déionisation (100), comprenant :
des électrodes (10a, 10b) pour l'adsorption de matières solides contenues dans de l'eau brute au moyen d'une force d'attraction électrique ou la désorption des matières solides adsorbées au moyen d'une force de répulsion électrique ;
un débitmètre prévu à une extrémité avant ou une extrémité arrière du filtre de déionisation pour obtenir la quantité d'eau brute introduite dans le filtre de déionisation ; et
une unité de commande d'alimentation (20) appliquant aux électrodes une tension de déionisation permettant l'adsorption des matières solides ou une tension de régénération permettant la séparation des matières solides adsorbées,
où l'unité de commande d'alimentation (20) est prévue
pour générer une quantité de substance solide accumulée en additionnant les quantités des matières solides adsorbées après application de la tension de déionisation aux électrodes, la quantité de substance solide accumulée étant calculée par : a) multiplication 1) d'une valeur totale des solides dissous (TDS) dans l'eau brute mesurée pendant une période définie, 2) de la quantité d'eau brute introduite dans le filtre de déionisation pendant la période définie, et 3) d'un taux d'élimination de consigne, lequel est un taux d'élimination défini des matières solides du filtre de déionisation, fixé en fonction d'un pourcentage d'ions minéraux exigé par un utilisateur, la valeur totale des solides dissous renvoyant à une quantité totale de matières ioniques dans un état ionique, et b) addition des quantités de matières solides calculées pendant des périodes respectives, et
pour appliquer la tension de régénération si la quantité de substance solide accumulée correspond à une limite de quantité de matières solides définie,
où l'unité de commande d'alimentation est en outre prévue pour calculer la TDS des matières solides contenues dans l'eau brute par mesure de l'amplitude d'un courant circulant dans les électrodes en appliquant une tension d'amplitude définie aux électrodes après introduction de l'eau brute dans le filtre de déionisation dans un état où aucune tension n'est appliquée aux électrodes du filtre de déionisation.

2. Filtre de déionisation (100), comprenant :
des électrodes (10a, 10b) pour l'adsorption de matières solides contenues dans de l'eau brute au moyen d'une force d'attraction électrique ou la désorption des matières solides adsorbées au moyen d'une force de répulsion électrique ;
un débitmètre prévu à une extrémité avant ou une extrémité arrière du filtre de déionisation pour obtenir la quantité d'eau brute introduite dans le filtre de déionisation ; et
une unité de commande d'alimentation (20) pour l'application aux électrodes d'une tension de déionisation permettant l'adsorption des matières solides ou d'une tension de régénération permettant la séparation des matières solides adsorbées,
où l'unité de commande d'alimentation (20) est prévue
pour générer une quantité de substance solide accumulée par addition des quantités de matières solides adsorbées après application de la tension de déionisation aux électrodes, la quantité de substance solide accumulée étant calculée par : a) multiplication 1) d'une valeur totale des solides dissous (TDS) dans l'eau brute mesurée pendant une période définie, 2) de la quantité de l'eau brute introduite dans le filtre de déionisation pendant la période définie, et 3) d'un taux d'élimination de consigne, lequel est un taux d'élimination défini des matières solides du filtre de déionisation, fixé en fonction d'un pourcentage d'ions minéraux exigé par un utilisateur, la valeur totale des solides dissous renvoyant à une quantité totale de matières ioniques dans un état ionique, et b) addition des quantités de matières solides calculées pendant des périodes respectives, et
pour appliquer la tension de régénération si la quantité de substance solide accumulée correspond à une limite de quantité de matières solides définie,
où l'unité de commande d'alimentation est en outre prévue pour mesurer l'amplitude d'un courant appliqué aux électrodes pour calculer une valeur TDS d'eau purifiée indiquant la TDS dans l'eau purifiée pendant une processus de déionisation éliminant les matières solides contenues dans l'eau brute en appliquant une tension d'amplitude définie aux électrodes, et calculer consécutivement la valeur TDS d'eau brute au moyen de la valeur TDS d'eau purifiée et du taux d'élimination de consigne.

3. Procédé de régénération d'un filtre de déionisation, comprenant :
un processus de mesure (S10) d'une valeur totale des solides dissous (TDS) dans l'eau brute (S10) où une valeur TDS d'eau brute est générée par mesure d'une valeur TDS des matières solides contenues dans l'eau brute ;
un processus de calcul (S20) d'une quantité de substance solide accumulée où une quantité de substance solide accumulée est générée par addition des quantités de matières solides adsorbées sur le filtre de déionisation pour éliminer les matières solides contenues dans l'eau brute pendant un processus de déionisation, par : a) multiplication 1) de la valeur TDS d'eau brute mesurée pendant une période définie, 2) d'une quantité d'eau brute introduite dans le filtre de déionisation pendant la période définie, et 3) d'un taux d'élimination de consigne, lequel est un taux d'élimination défini des matières solides du filtre de déionisation, fixé en fonction d'un pourcentage d'ions minéraux exigé par un utilisateur, la valeur totale des solides dissous renvoyant à une quantité totale de matières ioniques dans un état ionique, et b) addition des quantités de matières solides calculées pendant des périodes respectives ; et
un processus de régénération (S30) où est exécutée une régénération sur le filtre de déionisation si la quantité de substance solide accumulée correspond à une limite de quantité de matières solides définie,
où la TDS des matières solides contenues dans l'eau brute est obtenue par mesure de l'amplitude d'un courant circulant dans les électrodes en appliquant une tension d'amplitude définie aux électrodes après introduction de l'eau brute dans le filtre de déionisation dans un état où aucune tension n'est appliquée aux électrodes du filtre de déionisation.

4. Procédé de régénération d'un filtre de déionisation, comprenant :
un processus de mesure (S10) d'une valeur totale des solides dissous (TDS) dans l'eau brute (S10) où une valeur TDS d'eau brute est générée par mesure d'une valeur TDS des matières solides contenues dans l'eau brute ;
un processus de calcul (S20) d'une quantité de substance solide accumulée où une quantité de substance solide accumulée est générée par addition des quantités de matières solides adsorbées sur le filtre de déionisation pour éliminer les matières solides contenues dans l'eau brute pendant un processus de déionisation, par : a) multiplication 1) de la valeur TDS d'eau brute mesurée pendant une période définie, 2) d'une quantité d'eau brute introduite dans le filtre de déionisation pendant la période définie, et 3) d'un taux d'élimination de consigne, lequel est un taux d'élimination défini des matières solides du filtre de déionisation, fixé en fonction d'un pourcentage d'ions minéraux exigé par un utilisateur, la valeur totale des solides dissous renvoyant à une quantité totale de matières ioniques dans un état ionique, et b) addition des quantités de matières solides calculées pendant des périodes respectives ; et
un processus de régénération (S30) où est exécutée une régénération sur le filtre de déionisation si la quantité de substance solide accumulée correspond à une limite de quantité de matières solides définie,
où le processus de mesure de la TDS d'eau brute comprend :
un processus de mesure de TDS d'eau purifiée, où une valeur TDS d'eau purifiée est générée par mesure d'une valeur TDS dans l'eau purifiée quand le filtre de déionisation élimine les matières solides contenues dans l'eau brute à un taux d'élimination de consigne défini pour générer l'eau purifiée ; et
un processus de calcul de TDS d'eau brute où est calculée la valeur TDS d'eau brute au moyen de la valeur TDS d'eau purifiée et du taux d'élimination de consigne.
